# EUROPEAN PATENT SPECIFICATION

(11) **EP 3 771 006 B1**
(45) Date of publication and mention of the grant of the patent: **07.09.2022**
(21) Application number: 18910895.4
(22) Date of filing: 29.10.2018
(51) Int. Cl.: H01M 6/06, H01M 4/06, H01M 4/24, H01M 4/36, H01M 4/50, H01M 6/08, H01M 4/02, H01M 4/76

(54) **ALKALINE BATTERY**
ALKALIBATTERIE
BATTERIE ALCALINE

(30) Priority: 20.03.2018 JP 2018053482
(43) Date of publication of application: 27.01.2021
(73) Proprietor: Panasonic Intellectual Property Management Co., Ltd., Osaka-shi, Osaka 540-6207 (JP)
(72) Inventor: YOKOYAMA, Takaaki, Osaka-shi, Osaka 540-6207 (JP)
(74) Representative: Vigand, Philippe
(86) International application number: PCT/JP2018/040177
(87) International publication number: WO 2019/181052

(56) References cited:
- EP-A1- 3 249 726
- WO-A1-2017/110023
- WO-A1-2017/110024
- WO-A1-2017/119018
- JP-A- 2002 519 835
- JP-A- 2013 020 866
- US-A1- 2005 153 197
- US-A1- 2012 094 159

## Description

### TECHNICAL FIELD

The present disclosure relates to an improvement of a positive electrode in an alkaline battery including a battery case including a body portion having a small thickness.

### BACKGROUND ART

An alkaline battery has large capacity, and from which a large electric current can be taken out. Therefore, an alkaline battery is widely used. A positive electrode of an alkaline battery includes a pellet containing manganese dioxide powder as a positive electrode active material and graphite powder as a conductive agent. In an alkaline battery, manganese dioxide expands during discharge, so that an entire positive electrode expands.

In view of increasing the capacity of an alkaline battery, it is considered to be advantageous that an amount of manganese dioxide in a positive electrode is increased, or a thickness of a battery case (in particular, a body portion) that does not contribute to the capacity is reduced. In this case, however, an influence of the expansion of the positive electrode easily appears. The document JP2002519835 discloses an electrochemical cell. The document EP3249726 and US2005153197 disclose an alkaline cell. The document JP201320866 discloses an alkaline dry battery.

PTL 1 proposes use of manganese dioxide having a half-width of a 110 plane by powder X-ray diffraction measurement of 2.00 to 2.40 degrees, from the viewpoint that expansion of a positive electrode at an end of discharge is suppressed when the amount of manganese dioxide is increased in the positive electrode of the alkaline battery.

PTL 2 proposes that in an alkaline battery including a battery case including a body portion having a small thickness, from the viewpoint of suppressing a rupture in the battery case, a density of manganese dioxide of a pellet positioned in a middle portion in the height direction of a positive electrode is set to 2.75 g/cm³ or less.

### Citation List

### Patent Literature

PTL 1: International Publication WO2013/157181
PTL 2: International Publication WO2017/110023

### SUMMARY OF THE INVENTION

In general, in an alkaline battery, when an amount of manganese dioxide in a positive electrode is increased, expansion of the positive electrode is remarkable. In particular, when a thickness of a body portion of a battery case is small, since an influence by the expansion of the positive electrode is remarkable, it is difficult to suppress swelling or a rupture of the battery case even when the technology of PTL 1 is used. As in PTL 2, when a density of manganese dioxide in a pellet is decreased, the strength of the pellet tends to be reduced.

One aspect of the present disclosure relates to an alkaline battery including: a tubular battery case; a positive electrode filled in the battery case, and including a stack of n pieces of hollow tubular pellets; a negative electrode disposed in hollow portions of the pellets; a separator disposed between the positive electrode and the negative electrode; and an alkaline electrolytic solution, wherein the battery case includes a body portion having a thickness of 0.15 mm or less, and of 0.08 mm or more; the positive electrode contains manganese dioxide and a conductive agent; n is an integer of 3 or more, and 8 or less; and a first proportion is lower than a second proportion, where the first proportion is a proportion of a mass of the conductive agent in a total mass of the manganese dioxide and the conductive agent in at least one pellet positioned in a middle portion in a height direction of the stack, and the second proportion is a proportion of a mass of the conductive agent in a total mass of the manganese dioxide and the conductive agent in at least one pellet positioned in end portions in the height direction of the stack, wherein a difference between the first proportion and the second proportion is 1% by mass or more.

Another aspect of the present disclosure, not part of the present invention, relates to an alkaline battery including: a tubular battery case; a positive electrode filled in the battery case, and including a stack of n pieces of hollow tubular pellets; a negative electrode disposed in hollow portions of the pellets; a separator disposed between the positive electrode and the negative electrode; and an alkaline electrolytic solution, wherein the battery case includes a body portion having a thickness of 0.15 mm or less; the positive electrode contains manganese dioxide and a conductive agent; n is an integer of 3 or more; and first resistance is higher than second resistance, where the first resistance is resistance of at least one pellet positioned in a middle portion in a height direction of the stack, and the second resistance is resistance of at least one pellet positioned in end portions in the height direction of the stack.

In the alkaline battery including the battery case including the body portion having a small thickness, swelling of the body portion can be reduced while strength of a pellet of the positive electrode is maintained.

### BRIEF DESCRIPTION OF THE DRAWINGS

FIG. 1 is a longitudinal sectional view showing an outline of an alkaline battery in accordance with a first exemplary embodiment of the present disclosure.
FIG. 2 is an outline longitudinal sectional view schematically showing a positive electrode included in the alkaline battery of FIG. 1.
FIG. 3 is an outline longitudinal sectional view schematically showing a positive electrode included in an alkaline battery in accordance with a second exemplary embodiment of the present invention.
FIG. 4 is an outline longitudinal sectional view schematically showing a positive electrode included in an alkaline battery in accordance with a third exemplary embodiment of the present invention.

### DESCRIPTION OF EMBODIMENTS

An alkaline battery of the present disclosure includes a tubular battery case; a positive electrode filled in the battery case, and including a stack of n pieces of hollow tubular pellets; a negative electrode disposed in hollow portions of the pellets; a separator disposed between the positive electrode and the negative electrode; and an alkaline electrolytic solution. The battery case includes a body portion having a thickness of 0.15 mm or less and of 0.08 mm or more.

The positive electrode contains manganese dioxide and a conductive agent. n is an integer of 3 or more, and 8 or less.

In an alkaline battery according to one aspect of the present disclosure, not part of the invention, resistance of at least one pellet positioned in the middle portion in the height direction of the stack (hereinafter, referred to as "first resistance") is higher than resistance of at least one pellet positioned in end portions in the height direction of the stack (hereinafter, referred to as "second resistance"). In an alkaline battery according to another aspect, a proportion of a mass of a conductive agent in a total mass of the manganese dioxide and the conductive agent in at least one pellet positioned in the middle portion in the height direction of the stack (hereinafter, referred to as a "first proportion") is lower than a proportion of a mass of the conductive agent in a total mass of the manganese dioxide and the conductive agent in at least one pellet positioned in the end portions in the height direction of the stack.

Note here that a pellet positioned in the middle portion in the height direction of the stack may also be referred to as a middle pellet, and pellets positioned in the end portions in the height direction of the stack may also be referred to as end pellets.

Since the end portions in the height direction of the alkaline battery are provided with a bottom portion or a sealing unit of the battery case, the end portions have higher strength than the body portion of the battery case. In the battery case including a body portion having a small thickness, a difference between strength of the end portions in the height direction and strength of the body portion in the height direction becomes larger. Therefore, in the end portions in the height direction of the battery, even if the positive electrode expands during discharge, change of a volume of the case due to the expansion does not easily occur. Meanwhile, in the body portion, swelling remarkably appears in accordance with expansion of the positive electrode. In some case, a rupture may occur in the body portion. Note here that in the alkaline battery, when a thickness of the body portion of the battery case is more than 0.15 mm, a certain degree of strength can be secured, so that the swelling of the body portion by the expansion of the positive electrode does not become a serious problem.

The body portion of the battery case is a region other than the end portions in the height direction of the tubular battery case. The thickness of the body portion is a thickness of a region facing a circumferential surface of the middle pellet in the body portion. The thickness of the body portion is measured by, for example, an X-ray CT image of the battery. In the CT image, thicknesses of a plurality of arbitrary sections (for example, 10 sections) of the region of the body portion facing the circumferential surface of the middle pellet are measured and averaged, and the averaged thickness may be used as the thickness of the body portion.

In the above-mentioned aspects of the present disclosure, the first resistance of the middle pellet is made to be higher than the second resistance of the end pellets by, for example, making the first proportion of the conductive agent in the middle pellet lower than the second proportion of the conductive agent in the end pellets. Thus, since the end pellets having lower resistance are preferentially discharged, a depth of discharge of manganese dioxide in the middle pellet can be made to be shallower as compared with that in the end pellets. When the depth of discharge becomes shallower, expansion of the middle pellet due to discharge can be suppressed. Thus, even when a thickness of the body portion of the battery case is as low as 0.15 mm or less, swelling of the body portion that is easily affected by the expansion of the positive electrode can be reduced or suppressed. Furthermore, since swelling of the battery case is reduced by adjusting the resistance (for example, the proportion of the conductive agent) of the middle pellet, unlike a case where the density of manganese dioxide in the middle pellet is adjusted, strength of the pellet is easily secured. When the strength of the pellet is secured, occurrence of chipping and/or cracking of the pellet in a manufacturing process of the battery can be suppressed, and therefore, deterioration of productivity can be suppressed.

In view of preventing the depth of discharge of manganese dioxide in the middle pellet from becoming deeper by preferentially discharging the pellets positioned at both ends in the height direction of the stack, the first proportion is preferably lower than the second proportion of each of the both end pellets. From the same viewpoint, the first resistance is preferably higher than the second resistance of each of the both end pellets.

A middle pellet (that is, a pellet positioned in the middle portion in the height direction of the stack) means one pellet through which a center plane in the height direction of the stack passes, or two pellets sandwiching the center plane, regardless of whether n is an odd number or an even number. When n is an odd number, a pellet positioned in the middle portion is usually one pellet through which the center plane passes. When n is an even number, a pellet positioned in the middle portion is usually two pellets sandwiching the center plane.

Note here that the center plane of the stack in the height direction is a plane passing through the center in the height direction of the stack, and being perpendicular to the height direction (or the axial direction) (hereinafter, also referred to as a center plane).

In the above-mentioned aspects, the first proportion or the first resistance and the second proportion or the second resistance in at least one pellet of the middle pellets are only required to satisfy the above-relation. When the middle pellet is one pellet through which the center plane crosses, the first proportion or the first resistance and the second proportion or the second resistance in the one pellet are only required to satisfy the above relation. When the middle pellet is two pellets sandwiching the center plane, the first proportion or the first resistance and the second proportion or the second resistance in at least one of the two pellets are only required to satisfy the above-relation, or the first proportion or the first resistance and the second proportion or the second resistance in each of the two pellets may satisfy the above-relation.

The proportion of the conductive agent in each pellet can be obtained by dividing a mass of the conductive agent included in the pellet by a total mass of the manganese dioxide and the conductive agent included in the pellet. The mass of the manganese dioxide contained in each pellet can be calculated by taking out the pellet from the battery, sufficiently dissolving the pellet in acid, then removing insoluble parts and collecting a solution, measuring the content of Mn contained in the solution by high-frequency Inductively Coupled Plasma-Optical Emission Spectrometry (ICP Optical Emission Spectrometry), and converting the content into a MnO₂ amount. The above collected insoluble parts are dried at 110°C for one hour, and the dried product was heated at 800°C for three hours to obtain the mass reduction amount by heating. The amount can be defined as a mass of the conductive agent contained in each pellet.

Note here that in this specification, analysis of pellets is carried out with respect to pellets of an alkaline battery in the initial state (more specifically, pellets included in an alkaline battery or pellets taken out from an alkaline battery), unless otherwise notified. The alkaline battery in the initial state is, for example, an alkaline battery after assembly of a battery (or after aging the assembled battery) and before first discharging.

Hereinafter, the alkaline battery according to the above aspects is described in more detail appropriately with reference to drawings. Note here that the present disclosure is not limited to the following exemplary embodiments. Furthermore, any appropriate modifications can be carried out in a range of the scope in which the advantageous effect of the present invention is exhibited. Furthermore, the exemplary embodiments may be combined with the other exemplary embodiments.

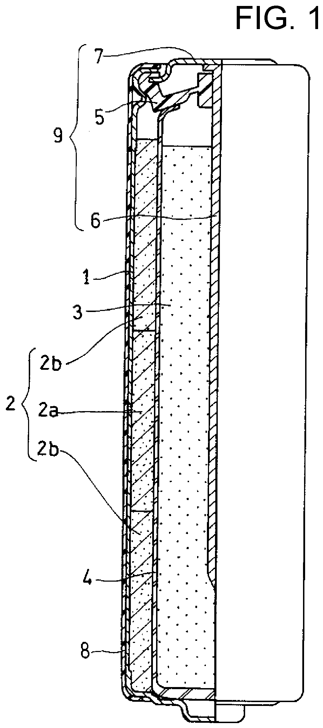

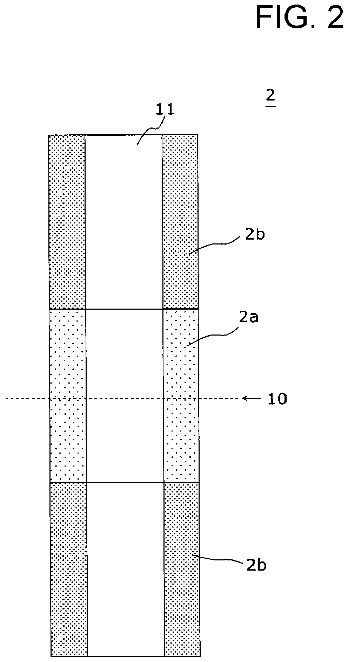

FIG. 1 is a front view of an alkaline battery with a lateral half shown in cross section in accordance with a first exemplary embodiment of the present disclosure. FIG. 2 is an outline side view schematically showing positive electrode 2 included in the alkaline battery of FIG. 1.

As shown in FIGs. 1 and 2, the alkaline battery includes hollow cylindrical positive electrode 2, negative electrode 3 disposed in a follow portion of positive electrode 2, separator 4 disposed between positive electrode 2 and negative electrode 3, and an alkaline electrolytic solution (not shown). These are housed in closed-end cylindrical battery case 1 serving as a positive terminal. Positive electrode 2 is filled in battery case 1. Gelled negative electrode 3 is filled in the hollow portion of positive electrode 2 with separator 4 interposed between positive electrode 2 and negative electrode 3.

Separator 4 has a closed-end (=bottomed) cylindrical shape. Separator 4 is disposed on the inner surface of the hollow portion of positive electrode 2, separates positive electrode 2 from negative electrode 3, and separates negative electrode 3 from battery case 1. Positive electrode 2 contains manganese dioxide and a conductive agent. Negative electrode 3 usually contains an alkaline electrolytic solution and a gelling agent, in addition to a negative electrode active material containing zinc.

An opening of battery case 1 is sealed by sealing unit 9. Sealing unit 9 includes gasket 5, negative electrode terminal plate 7 that serves as a negative electrode terminal, and negative electrode current collector 6. Negative electrode current collector 6 is inserted into negative electrode 3. Negative electrode current collector 6 has a nail-shape having a head portion and a body portion. The body portion is inserted into a through-hole provided in the middle tubular portion of gasket 5. The head portion of negative electrode current collector 6 is welded to a flat part of the middle portion of negative electrode terminal plate 7. An opening end portion of battery case 1 is crimped to a flange portion of a circumference of negative electrode terminal plate 7 via the outer peripheral end of gasket 5. The outer surface of battery case 1 is covered with outer packaging label 8.

In the examples shown in the drawings, positive electrode 2 includes a stack of three pellets in total (that is, n=3) of one pellet 2a and two pellets 2b sandwiching pellet 2a, pellets 2a and 2b having a hollow cylindrical shape having hollow portion 11. Three pellets, that is, pellets 2a and 2b, are produced to have substantially the same size (or height). Center plane 10 positioned in the center in the height direction of the stack crosses pellet 2a disposed in the middle of the three pellets 2a and 2b.

First resistance of pellet (middle pellet) 2a positioned in the middle portion in the height direction of the positive electrode is made to be higher than second resistance of pellets (end pellets) 2b positioned in the end portions in the height direction of the stack. For example, by making the first proportion of the conductive agent of middle pellet 2a lower than the second proportion of the conductive agent of end pellets 2b, the first resistance can be made to be higher than the second resistance. Due to such a difference in the resistance or the proportion of the conductive agent, since a depth of discharge of the manganese dioxide in middle pellet 2a is shallower than end pellets 2b, expansion in middle pellet 2a can be reduced. Therefore, even when the thickness of the body portion of the battery case is as low as 0.15 mm or less, swelling of the body portion can be reduced or suppressed. Also, a rupture in the body portion can be suppressed.

The first resistance of middle pellet 2a is only required to be higher than second resistance of at least one of two end pellets 2b positioned at both end portions in the height direction of the stack. In view of increasing an effect of suppressing the swelling of the body portion, it is preferable that the first resistance is higher than the second resistance of each of the two end pellets. Similarly, the first proportion of the conductive agent of in middle pellet 2a is only required to be lower than the second proportion of the conductive agent in at least one of two end pellets 2b, and it is preferable that the first proportion is lower than the second proportion of each of two end pellets 2b.

FIG. 2 schematically shows a difference in resistance of pellets in the stack (for example, a difference in the proportion of the conductive agents) by the number of hatching points (or lightness and darkness in color of pellets). More specifically, Fig. 2 shows that middle pellet 2a has less hatching points (lighter color) than pellets 2b positioned at both end portions and has a lower proportion of the conductive agent (or higher resistance).

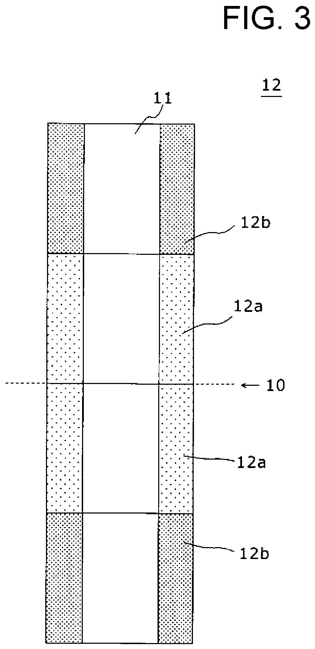

FIG. 3 is an outline sectional view schematically showing a positive electrode included in an alkaline battery in accordance with a second exemplary embodiment of the present disclosure. FIG. 3 is the same as FIG. 2 except that the number of pellets constituting positive electrode 12 is different, and the relation of the resistance and the proportion of the conductive agent in each pellet are different. In FIG. 3, positive electrode 12 includes four pellets in total (that is, n=4) of two pellets (middle pellet) 12a positioned in the middle portion in the height direction of the stack, and two end pellets 12b adjacent to each of pellets 12a. Both pellets 12a and 12b have a hollow cylindrical shape having hollow portion 11.

Center plane 10 positioned in the center in the height direction of the stack is positioned on the interface between two middle pellets 2a. FIG. 3 also schematically shows a difference in resistance of pellets in the stack (for example, a difference in the proportion of the conductive agent) by the number of hatching points (or lightness and darkness in color of pellets). In the example of FIG. 3, two middle pellets 12a have less hatching points (or lighter in color) than two end pellets 12b. In other words, the first resistance of each of two middle pellets 12a is higher than the second resistance of each of the two end pellets 12b. For example, the first proportion of the conductive agent of each of the two middle pellets 12a is lower than the second proportion of the conductive agent of each of the two end pellets 12b.

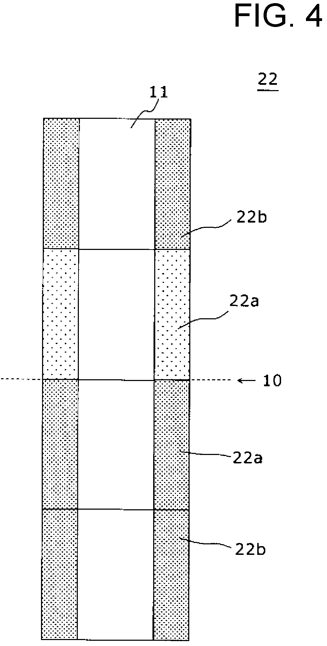

However, examples are not limited to one shown in FIG. 3. The first resistance (or the first proportion) in at least one of the two middle pellets may be higher (or lower) than the second resistance (or the second proportion) of the end pellets. FIG. 4 shows an example in which the first resistance is lower than the second resistance in one pellet of the two middle pellets.

FIG. 4 is an outline sectional view schematically showing a positive electrode included in an alkaline battery in accordance with a third exemplary embodiment of the present disclosure. FIG. 4 is the same as FIG. 3 except that the relation of the resistance or the proportion of the conductive agent in each pellet is different. In FIG. 4, positive electrode 22 includes a stack of four pellets in total (that is, n = 4), that is, two pellets 22a positioned in the middle portion in the height direction of the stack and two end pellets 22b adjacent to each of two pellets 22a, respectively. Both pellets 22a and 22b have a hollow cylindrical shape having hollow portion 11.

In FIG. 4, one middle pellet 22a of two middle pellets 22a has less hatching points (or lighter color), and remaining middle pellet 22a and two end pellets 22b have a larger number of hatching points (or thicker in color). That is to say, in one of the two middle pellets 22a, the resistance is higher (or the proportion of the conductive agent is lower) than in end pellet 22b.

Hereinafter, the alkaline battery is described in detail.

### Positive electrode 2

Positive electrode 2 includes a stack of n pieces of hollow cylindrical pellets 2a and 2b. Positive electrode 2 is filled in tubular battery case 1. Note here that positive electrodes 12 and 22 are different from positive electrode 2 only in the number of pellets and the relation of the resistance or the proportion of the conductive agent of each pellet, so that positive electrodes 12 and 22 can be referred to as the description for positive electrode 2.

Positive electrode 2 contains manganese dioxide and the conductive agent. Manganese dioxide serves as a positive electrode active material. Positive electrode 2 can include a resin binder, additives, and the like, as necessary. In the above-mentioned aspects, the first resistance of middle pellet 2a is made to be higher than the second resistance of at least one end pellet 2b. For example, the first proportion of the conductive agent in middle pellet 2a is made to be lower than the second proportion of the conductive agent in at least one end pellet 2b. Thus, expansion of middle pellet 2a can be reduced. Therefore, although battery case 1 including the body portion having a small thickness is used, swelling of the body portion can be reduced, and a rupture in the body portion can be suppressed.

The first resistance of middle pellet 2a is only required to be higher than the second resistance of at least one pellet 2b of two end pellets 2b at both end portions in the height direction of the stack. From the viewpoint of increasing the effect of making a depth of discharge of manganese dioxide in middle pellet 2a shallow, it is preferable that the first resistance is higher than the second resistance of each of two end pellets 2b. Note here that the second resistance of two end pellets 2b may be the same as each other or different from each other.

When the stack includes two middle pellets, it is preferable that the first resistance of at least one middle pellet is higher than the second resistance of at least one end pellet (preferably, each of the two end pellets). As shown in FIG. 3, the first resistance of two middle pellets 12a may be made to be higher than the second resistance of each of end pellets 12b. As shown in FIG. 4, the first resistance of one middle pellet 22a may be made to be higher than the second resistance of each of end pellets 22b. Note here that the second resistance of two middle pellets may be the same as each other or different from each other.

When positive electrode 2 includes a pellet (hereinafter, also referred to as a third pellet) other than the middle pellet and the end pellets, the resistance in the third pellet may be the same as or different from that of the middle pellet. The resistance in the third pellet may be the same as or different from that of the end pellet. The resistance in each pellet may be reduced in a stepwise manner from the middle pellet toward one of the end pellets.

Examples of a method for making the first resistance of middle pellet 2a higher than end pellets 2b include a method of making the first proportion of the conducive agent in middle pellet 2a lower than the second proportion of the conductive agent in end pellets 2b. Furthermore, the proportion of the resin binder in middle pellet 2a may be made to be higher than the proportion of the resin binder in end pellets 2b. Resistance of middle pellet 2a and end pellets 2b may be adjusted by adjusting the average particle diameters of manganese dioxide raw material powder and/or the conductive agent to be used for producing a pellet. Furthermore, two or more elements selected from the proportion of the conductive agent, the proportion of the resin binder, the average particle diameter of manganese dioxide raw material powder, and the average particle diameter of the conductive agent, and the like, may be adjusted. For example, at least one element selected from the proportion of the conductive agent, the proportion of the resin binder, the average particle diameter of manganese dioxide raw material powder, the average particle diameter of the conductive agent, and the like. However, a method of adjusting resistance of each pellet is not necessarily limited to these methods.

The first proportion of the conductive agent in middle pellet 2a is only required to be lower than the second proportion of the conductive agent in at least one end pellet. From the view point of enhancing the effect of making a depth of discharge of the manganese dioxide in middle pellet 2a shallow, the first proportion is preferably lower than the second proportion of each of two end pellets 2b. When the stack includes two middle pellets, it is preferable that the first proportion in at least one middle pellet is lower than the second proportion in at least one end pellet (preferably, each of the two end pellets). Note here that in two end pellets 2b, the second proportions may be the same as each other and different from each other. Furthermore, in the two middle pellets, the first proportions may be the same as each other and different from each other.

A difference between the first proportion and the second proportion is, for example, 1.0% by mass or more, 1.5% by mass or more or 1.87% by mass or more, may be 2.0% by mass or more or 2.1% by mass or more, and may be 2.14% by mass or more. When the difference of the respective proportions is in such a range, end pellets 2b are preferentially discharged. Therefore, the effect of reducing the swelling of the body portion can be increased. Furthermore, an effect of suppressing a rupture in the body portion is also high. The difference between the first proportion and the second proportion is, for example, 5.5% by mass or less, and preferably 5.1% by mass or less. When the difference of the proportions is in such a range, reduction of use rate of manganese dioxide can be suppressed, and thus a high capacity is easily secured. These lower and upper limit values can be arbitrarily combined with each other.

The first proportion in middle pellet 2a is, for example, 7.0% by mass or less, preferably 6.5% by mass or less, and more and preferably 5.9% by mass or less. When the first proportion is in such a range, in middle pellet 2a, the depth of discharge of manganese dioxide is easily kept shallow. The first proportion is, for example, 2.9% by mass or more, may be 2.95% by mass or more, or 3.2% by mass or more or 3.22% by mass or more. When the first proportion is in such a range, reduction of the use rate of manganese dioxide can be suppressed, and a high capacity is easily secured. These lower and upper limit values can be arbitrarily combined with each other.

Each pellet included in positive electrode 2 (specifically, each of the middle pellet, the end pellet, and the third pellet), the density of the manganese dioxide is, for example, 2.76 g/cm³ or more, and may be 3.0 g/cm³ or more. When the density of manganese dioxide is in such a range, the high capacity can be easily secured, and, in addition, the strength of the pellet can be secured more easily. The density of manganese dioxide in each pellet is preferably 3.2 g/cm³ or less, and further preferably 3.14 g/cm³ or less. When the density of manganese dioxide in each pellet is in such a range, swelling of the body portion is reduced more easily. These lower and upper limit values can be arbitrarily combined with each other.

In the middle pellet 2a and at least one end pellet 2b (preferably two end pellets 2b), a difference of the density of manganese dioxide is, for example, 0.5 g/cm³ or less, preferably 0.2 g/cm³ or less, and preferably 0.1 g/cm³ or less. When the difference of the density is in the above range, while the pellet strength is secured, an effect by the difference between resistance of the middle pellet and the resistance of the end pellets can be exhibited more easily.

The density of manganese dioxide in each pellet can be obtained by dividing a mass of manganese dioxide included in the pellet by a volume of the pellet. The mass of the manganese dioxide included in each pellet is obtained by the above-described procedure. The volume of the pellet can be calculated based on an outer diameter, an inner diameter, and a height of each pellet measured, for example, in an X-ray CT image of a battery.

N is an integer of 3 or more, preferably an integer of 3 or more and 8 or less, and further preferably an integer of 3 or more and 6 or less. When n is in such a range, adjustment of resistance, for example, adjustment of the proportion of a conductive agent between pellets can be easily carried out.

Sizes of pellets may be the same as or different from each other. Furthermore, a part of pellets may have the same size.

As raw materials of manganese dioxide to be used for production of pellets, electrolytic manganese dioxide is preferable.

The raw materials of manganese dioxide to be used for production of pellets (electrolytic manganese dioxide, or the like) is used in a form of powder. From the viewpoint that the filling property of a positive electrode and diffusivity of an electrolytic solution in the positive electrode are easily obtained, the average particle diameter (D50) of the manganese dioxide raw material powder is, for example, 25 µm or more and 60 µm or less.

The relation between the resistance of middle pellet 2a and resistance of end pellets 2b may be adjusted by adjusting the average particle diameter of manganese dioxide raw material powder. The resistance of middle pellet 2a is made to be higher than the resistance of end pellets 2b by making the average particle diameter of manganese dioxide raw material powder to be used for middle pellet 2a larger than the average particle diameter of manganese dioxide raw material powder to be used for end pellets 2b. The average particle diameter of manganese dioxide raw material powder to be used for middle pellets 2a may be, for example, 1.5 times or more as the average particle diameter of manganese dioxide raw material powder to be used for end pellets 2b. The average particle diameter of manganese dioxide raw material powder to be used for middle pellet 2a may be, for example, 3 times or less as average particle diameter of manganese dioxide raw material powder to be used for end pellets 2b.

In view of formability and suppression of expansion of the positive electrode, Brunauer-Emmett-Teller (BET) specific surface area of manganese dioxide raw material powder may be, for example, in a range of 15 m²/g or more and 50 m²/g or less.

Note here that the average particle diameter (D50) in this specification is a median diameter in a volumetric particle size distribution. The average particle diameter is calculated using, for example, a laser diffraction/scattering particle size distribution meter. Furthermore, the BET specific surface area is obtained by measuring and calculating a surface area using a BET equation, which is a theoretical equation of multilayer adsorption. The BET specific surface area can be measured using, for example, a specific surface area measuring device by a nitrogen adsorption method.

Examples of the conductive agent included in pellets forming positive electrode 2 include carbon black such as acetylene black, and a conductive carbon material such as graphite. As the graphite, natural graphite, artificial graphite, and the like, can be used. The conductive agent may be fibrous, and the like, but it is preferably powdery.

The average particle diameter (D50) of the conductive agent to be used for production of each pellet is, for example, 3 µm or more and 30 µm or less. The resistance of middle pellet 2a may be made to be higher than the resistance of end pellets 2b by making the average particle diameter of the conductive agent to be used for middle pellet 2a larger than the average particle diameter of the conductive agent to be used for end pellets 2b. The average particle diameter of the conductive agent to be used for middle pellet 2a may be, for example, 1.5 times or more as the average particle diameter of the conductive agent to be used for end pellets 2b. The average particle diameter of the conductive agent to be used for middle pellet 2a may be, for example, 3 times or less as the average particle diameter of the conductive agent to be used for end pellets 2b.

The average proportion of the conductive agent in positive electrode 2 is, for example, 3% by mass or more and 10% by mass or less, and preferably 4% by mass or more and 8% by mass or less. Note here that the average proportion of the conductive agent in positive electrode 2 can be obtained as follows: a mass of manganese dioxide forming positive electrode 2 and a mass of the conductive agent in each pellet are obtained by aforementioned procedure, and a total mass of the conductive agent of each pellet is divided by a total mass of the manganese dioxide and the conductive agent of each pellet.

When positive electrode 2 includes a resin binder, as the resin binder, resin binders to be used for a positive electrode of an alkaline battery can be used without particular limitation. Examples of the resin binder include fluororesins such as polytetrafluoroethylene, and fluoroethylene-fluoropropylene copolymer, rubbery polymers such as styrene-butadiene rubber, and the like.

When the resistance of middle pellet 2a and the resistance of end pellets 2b are adjusted by adjusting the proportion of the resin binder, the proportion of the resin binder in end pellets 2b is made to be larger than the proportion of the resin binder of middle pellet 2a, for example, may be made to be 2 times or more as the proportion of the resin binder of middle pellet 2a. The proportion of the resin binder in end pellets 2b may be, for example, 5 times or less as the proportion of the resin binder in middle pellet 2a.

Positive electrode 2 usually further includes an alkaline electrolytic solution. As the alkaline electrolytic solution, the below-mentioned solutions can be used.

Each pellet is obtained by compression-molding a positive electrode material mixture including, for example, a positive electrode active material, a conductive agent, an alkaline electrolytic solution, a resin binder and/or additives as necessary, into a desired shape. The positive electrode material mixture is once formed into a flake shape or a granular shape, and classified as necessary, followed by compression-molding.

### Negative electrode 3

Negative electrode 3 is disposed in hollow portions of pellets of positive electrode 2. Negative electrode 3 has a gelled form. Negative electrode 3 usually contains powder of zinc or a zinc alloy as a negative electrode active material, an alkaline electrolytic solution, and a gelling agent.

In view of corrosion resistance, the zinc alloy preferably includes at least one selected from the group consisting of indium, bismuth and aluminum. A negative electrode active material is usually used in a form of powder. In view of the filling property of the negative electrode and diffusivity of an alkaline electrolytic solution inside negative electrode 3, the average particle diameter (D50) of the negative electrode active material powder is, for example, 100 µm or more and 200 µm or less, and preferably 110 µm or more and 160 µm or less.

The gelling agent is not particularly limited and any well-known gelling agents used in the field of alkaline batteries can be used. For example, a thickener and/or a water absorbing polymer can be used. Examples of such gelling agents include polyacrylic acid and sodium polyacrylate.

The addition amount of the gelling agent is, for example, 0.5 parts by mass or more and 2 parts by mass or less with respect to 100 parts by mass of the negative electrode active material.

The content of powder of zinc or a zinc alloy is, for example, 170 parts by mass or more and 220 parts by mass or less with respect to 100 parts by mass of the alkaline electrolytic solution.

For negative electrode 3, for adjusting the corrosion resistance of zinc, surfactants such as a polyoxyalkylene group-containing compound, and phosphate ester (for example, phosphate ester or an alkali metal salt thereof, and the like) may be used.

### Negative electrode current collector 6

Negative electrode current collector 3 is inserted into gelled negative electrode 3. Materials of negative electrode current collector 3 include, for example, an alloy containing copper and zinc, such as brass. Negative electrode current collector 6 may be subjected to metal plating such as tin plating, as necessary.

### Separator 4

Examples of separator 4 interposed between positive electrode 2 and negative electrode 3 include non-woven fabric and microporous films. Examples of material of separator 4 include cellulose, polyvinyl alcohol, and the like. As the non-woven fabric, for example, one mainly including fibers of these materials is used. As the microporous films, cellophane or the like is used.

FIG. 1 shows a closed-end (=bottomed) cylindrical separator as separator 4, but the separator is not necessarily limited to this and any well-known separators used in the field of alkaline batteries can be used. For example, a cylindrical separator and a bottom insulator (or a bottom separator) may be used together.

A thickness of separator 4 is, for example, 200 µm or more and 300 µm or less. Separator 4 preferably has the above-mentioned thickness as a whole. When separator 4 is made by stacking a plurality of sheets, the total thickness of the sheets is preferably in the above-mentioned range.

### Alkaline electrolytic solution

An alkaline electrolytic solution is included in positive electrode 2, negative electrode 3 and separator 4. As the alkaline electrolytic solution, for example, an alkaline aqueous solution including potassium hydroxide is used. The concentration of potassium hydroxide in the alkaline electrolytic solution is preferably 30% by mass or more and 50% by mass or less. The alkaline aqueous solution may further contain zinc oxide. The concentration of zinc oxide in the alkaline electrolytic solution is, for example, 1% by mass or more and 5% by mass or less.

### Battery case 1

As battery case 1, a tubular case is used. As such a case, a closed-end (=bottomed) tubular case is preferable. As battery case 1, a cylindrical case is used so often, but the case is not limited to this examples. Battery case 1 is made of, for example, a nickel-plated steel sheet. In order to achieve good adhesion between positive electrode 2 and battery case 1, the inner surface of battery case 1 may be covered with a carbon coating film.

Battery case 1 includes a bottom portion, and a tubular body portion integrated with the bottom portion and extending from the circumference of the bottom portion in the direction perpendicular to the bottom portion (in the height direction of the battery or positive electrode 2). In the alkaline battery of the present disclosure, the thickness of the body portion of battery case 1 is controlled to 0.15 mm or less. However, resistance such as the proportion of the conductive agent in middle pellet 2a and end pellets 2b is adjusted. Thus, in spite of such a small thickness, swelling of the body portion of battery case 1 due to expansion of positive electrode 2 can be reduced. Furthermore, when the thickness of the body portion is small, a high capacity can be secured.

The thickness of the body portion is only required to be 0.15 mm or less. The thickness of the body portion is, for example, 0.07 mm or more. From the viewpoint of enhancing an effect of reducing swelling of the body portion, the thickness of the body portion is preferably 0.08 mm or more.

The alkaline battery of the present disclosure is described mainly based on a configuration shown in FIG. 1, but the alkaline battery is not limited to this configuration alone. For the configuration other than positive electrode 2 of an alkaline battery, any well-known configurations in the field of the alkaline battery can be employed without limitation.

In the alkaline battery of the present disclosure, even if a thickness of the body portion of the battery case is small, the swelling of the body portion can be reduced. Therefore, the present invention is suitable particularly for batteries such as AA batteries and AAA batteries.

### EXAMPLES

Hereinafter, the present invention is described specifically based on Examples and Comparative Examples, but the present invention is not necessarily limited to the following Examples.

### Example 1 and Comparative Examples 1 to 3

An AA alkaline battery (LR6) that is shown in FIG. 1 was produced according to the following procedures (1) to (3).

### (1) Production of positive electrode

Electrolytic manganese dioxide powder (manganese dioxide purity: 93%, average particle diameter D50: 40 µm, BET specific surface area: 26 m²/g) as a positive electrode active material, graphite powder as a conductive agent (average particle diameter D50: 10 µm), and polytetrafluoroethylene as a resin binder were mixed with each other.

An electrolytic solution was added to the resultant mixture, and these were sufficiently mixed to each other to obtain a positive electrode material mixture. Amounts of the resin binder and the electrolytic solution were 0.2 parts by mass and 2 parts by mass, respectively, with respect to 100 parts by mass of the total amount of electrolytic manganese dioxide and the conductive agent. For the electrolytic solution, an alkaline aqueous solution containing 35% by mass potassium hydroxide and 2% by mass zinc oxide, respectively. In each pellet, the mixture proportion of the electrolytic manganese dioxide and the conductive agent was adjusted such that the proportion of mass of the conductive agent in the total mass of manganese dioxide and the conductive agent becomes values in Table 1.

The positive electrode material mixture was pressure-molded into a hollow cylindrical shape using a mold to produce pellets 2a and 2b having an outer diameter of 13.60 mm, an inner diameter of 8.85 mm, and height of 14.5 mm. The density of manganese dioxide of each produced pellet was obtained by dividing a mass of manganese dioxide calculated from a raw material composition by a volume calculated from the pellet size.

### (2) Production of negative electrode

Zinc alloy powder as a negative electrode active material (average particle diameter D50: 130 µm), the above-mentioned electrolytic solution, and a gelling agent were mixed with each other to obtain gelled negative electrode 3. As the zinc alloy, a zinc alloy including 0.02% by mass of indium, 0.01% by mass of bismuth, and 0.005% by mass of aluminum was used. For the gelling agent, a mixture including crosslinked and branched polyacrylic acid and highly crosslinked chain sodium polyacrylate at a mass ratio of 1:2 was used. The mass ratio of negative electrode active material: electrolytic solution : gelling agent was set to 200:100:2.

### (3) Assembly of alkaline battery

Varniphite manufactured by Nippon Graphite Industries, Ltd. was applied onto the inner surface of a closed-end cylindrical battery case 1 (thickness of a body portion: 0.15 mm) made of a nickel-plated steel plate to form a carbon coating film having a thickness of approximately 10 µm. Three positive electrode pellets were inserted into battery case 1 in the longitudinal direction. At this time, the pellets were inserted from the positive terminal side of battery case 1 such that the same two pellets 2b were used in the first and third stages, and pellet 2a having a low proportion of the conductive agent was positioned in the second stage between pellets 2b. The closed-end cylindrical separator 4 was disposed at the inner side of positive electrode 2, and then the above-mentioned electrolytic solution was poured, and separator 4 was impregnated with the electrolytic solution. This state was left for a predetermined time to allow the electrolytic solution to infiltrate from separator 4 into positive electrode 2. Thereafter, a predetermined amount of gelled negative electrode 3 was filled into the inner side of separator 4. For separator 4, a non-woven fabric, mainly including solvent-spun cellulose fibers and polyvinyl alcohol fibers mixed in a mass ratio of 1:1, was used.

General brass (Cu content: about 65% by mass, Zn content: about 35% by mass) was pressed into a nail shape, and then the surface was plated with tin to obtain negative electrode current collector 6. The diameter of the body portion of negative electrode current collector 6 was set to 1.15 mm. The head portion of negative electrode current collector 6 was electrically welded to negative electrode terminal plate 7 made of a nickel plated steel plate. Thereafter, the body portion of negative electrode current collector 6 was press-fitted into the through-hole at the center of gasket 5 mainly including polyamide 6, 12. In this way, sealing unit 9 including gasket 5, negative electrode terminal plate 7, and negative electrode current collector 6 was produced.

Next, sealing unit 9 was installed in the opening of battery case 1. At this time, the body portion of negative electrode current collector 6 was inserted into negative electrode 3. The opening end portion of battery case 1 was crimped onto the circumference of negative electrode terminal plate 7 via gasket 5 so as to seal the opening of battery case 1. The outer surface of battery case 1 was covered with outer packaging label 8. In this way, alkaline batteries were produced.

### (4) Evaluation

The resultant pellets of positive electrodes or alkaline batteries were evaluated as follows.

### (a) Density of manganese dioxide in each pellet in battery

One week after the production of the batteries, X-ray CT images of the resultant batteries were picked up, and a volume of each pellets was calculated. The battery one week after the production was defined as a battery in the initial state. Furthermore, based on this value, according to the aforementioned procedure, the density of manganese dioxide of each pellet was obtained.

### (b) Strength of each pellet

Strength of each pellet of a positive electrode immediately after production was measured using a pellet strength measuring machine. As the measuring machine, a commercially available push-pull gauge (Handy Analog Force Gauge NK-20 manufactured by Japan Instrumentation System Co., Ltd.) was used. Specifically, the produced pellet was disposed in substantially the middle on a fixed compression surface of the measuring machine, a movable pressure board was allowed to move at a constant velocity of 1.3 cm/s, thereby applying a load to the pellet. A load (unit: gf) at the time when the pellet was broken was defined as a pellet strength.

Note here that 1 gf is nearly equal to 9.8×10⁻³ N.

### (c) Swelling of battery case

The produced alkaline battery was continuously discharged at resistance of 40 Ω, and the outer dimeter of the battery at the time when the closed-circuit voltage became 1.10 V was measured using a through gauge. In ten batteries, the number of batteries of having the outer diameter of the battery of larger than 14.50 mm, was counted.

### (d) Rupture in battery case

The produced alkaline battery was continuously discharged at resistance of 40Ω. One week after, a rupture in the battery case was visually observed. The number of batteries of 10 batteries, in which a rupture in a battery case had occurred, was counted.

### Examples 2 to 3

Pellets of the positive electrode were produced in the same manner as in Example 1 except that, in Example 1 (1), the mixture ratio of the electrolytic manganese dioxide and the conductive agent was adjusted in each pellet such that the proportion of a mass of the conductive agent in the total mass of the manganese dioxide and the conductive agent became the values in Table 1, and the height of the pellet was changed to 10.9 mm by adjusting the dimension of the mold. Then, the produced pellets of the positive electrode were evaluated.

In Example 1 (3), four positive electrode pellets were vertically inserted into battery case 1. At this time, in Example 2 as shown in FIG. 3, alkaline batteries were produced in the same manner as in Example 1 except that pellets were inserted such that the same pellets 12b were used as the pellets in the first and fourth stages from the positive terminal side of battery case 1, and two pellets 12a having a low proportion of the conductive agent were inserted between these pellets (pellets in the second and third stages). In example 3, alkaline batteries were produced in the same manner as in Example 1 except that pellets were inserted such that three pellets were used as the pellets in the first, second and fourth stages from the positive terminal side of battery case 1, and a pellet having a low proportion of the conductive agent was positioned as the third pellet. Then, the produced alkaline batteries were evaluated.

Results of Examples 1 to 3 and Comparative Examples 1 to 3 are shown in Table 1. A1 to A3 represent Examples 1 to 3, respectively. B1 to B3 represent Comparative Examples 1 to 3, respectively.

Note here that in the following Table, a density of manganese dioxide at the time when a pellet was produced is described as "MnO₂ density at the time of production of pellet," and a density of manganese dioxide and an average density calculated based on the volume of the pellet measured one week after the production of the battery is described as "MnO₂ density in battery."

**[Table 1]**

| | Thickness of body portion (mm) | n | Position of pellet* | Proportion of mass of conductive agent in total mass of MnO₂ and conductive agent (% by mass) | MnO₂ density at the time of production of pellet (g/m³) | MnO₂ density in positive electrode (g/m³) | Pellet strength (gf) | Second proportion - first proportion (% by mass) | Swelling of case (cases/ 10 cases) | Rapture of case (cases/ 10 cases) |
|---|---|---|---|---|---|---|---|---|---|---|
| A1 | 0.15 | 3 | 3 | 8.02 | 3.25 | 3.05 | 940 | 5.07 | 0 | 0 |
| | | | 2 | 2.95 | | 3.05 | 940 | | | |
| | | | 1 | 8.02 | | 3.05 | 940 | | | |
| A2 | 0.15 | 4 | 4 | 8.02 | | 3.05 | 940 | 4.42 | 0 | 0 |
| | | | 3 | 2.95 | | 3.05 | 940 | | | |
| | | | 2 | 2.95 | | 3.05 | 940 | | | |
| | | | 1 | 8.02 | | 3.05 | 940 | | | |
| A3 | 0.15 | 4 | 4 | 8.02 | | 3.05 | 940 | 5.07 | 0 | 0 |
| | | | 3 | 2.95 | | 3.05 | 940 | | | |
| | | | 2 | 8.02 | | 3.05 | 940 | | | |
| | | | 1 | 8.02 | | 3.05 | 940 | | | |
| B1 | 0.15 | 3 | 3 | 2.95 | | 3.05 | 940 | 0.00 | 0 | 0 |
| | | | 2 | 2.95 | 2.95 | 2.75 | 340 | | | |
| | | | 1 | 2.95 | 3.25 | 3.05 | 940 | | | |
| B2 | 0.15 | 3 | 3 | 2.95 | | 3.05 | 940 | 0.00 | 6 | 4 |
| | | | 2 | 2.95 | | 3.05 | 940 | | | |
| | | | 1 | 2.95 | | 3.05 | 940 | | | |
| B3 | 0.15 | 3 | 3 | 2.95 | 2.97 | 2.77 | 380 | 0.00 | 3 | 1 |
| | | | 2 | 2.95 | 2.97 | 2.77 | 380 | | | |
| | | | 1 | 2.95 | 2.97 | 2.77 | 380 | | | |

| | | | | | | | | | | |
|---|---|---|---|---|---|---|---|---|---|---|
| * Position of pellet from positive electrode terminal side | | | | | | | | | | |

As shown in Table 1, in A1 to A3 in which the first proportion of the conductive agent of the middle pellet is lower than the second proportion of the conductive agent of the end pellet (that is, the first resistance is higher than the second resistance), no battery had swelling or a rupture in the body portion of the battery case. Also, high pellet strength was able to be secured. On the contrary, in B1 to B3 in which the proportion of the conductive agent of the middle pellet and that of the end pellets are not different from each other, the pellet strength is low, or the proportion of the number of batteries in which swelling of the body portion was observed was 30% or more. Furthermore, in B2 and B3, the proportion of the number of batteries in which a rupture in the body portion was observed was 40% and 10%, respectively. In B1, the pellet strength of the middle pellet was low, and it was 340 gf. When the pellet strength was less than 350 gf, the frequency at which a chip of the pellet is increased during transportation of the pellets, thereby deteriorating productivity.

### Examples 4 to 8

Alkaline batteries were produced in the same manner as in Example 1 except that a thickness of a body portion of each battery case was changed as shown in Table 2, and the produced batteries were evaluated as in (a) and (c).

The results are shown in Table 2. A4 to A8 represent Examples 4 to 8, respectively. In Table 2, results of A1 and B2 are also shown.

**[Table 2]**

| | Thickness of body portion (mm) | n | Position of pellet* | Proportion of mass of conductive agent in total mass of MnO₂ and conductive agent (% by mass) | MnO₂ density in positive electrode (g/m³) | Second proportion - first proportion (% by mass) | Swelling of case (cases/10 cases) |
|---|---|---|---|---|---|---|---|
| A1 | 0.15 | 3 | 3 | 8.02 | 3.05 | 5.07 | 0 |
| | | | 2 | 2.95 | | | |
| | | | 1 | 8.02 | | | |
| A4 | 0.13 | | 3 | 8.02 | | | 0 |
| | | | 2 | 2.95 | | | |
| | | | 1 | 8.02 | | | |
| A5 | 0.11 | | 3 | 8.02 | | | 0 |
| | | | 2 | 2.95 | | | |
| | | | 1 | 8.02 | | | |
| A6 | 0.09 | | 3 | 8.02 | | | 0 |
| | | | 2 | 2.95 | | | |
| | | | 1 | 8.02 | | | |
| A7 | 0.08 | | 3 | 8.02 | | | 0 |
| | | | 2 | 2.95 | | | |
| | | | 1 | 8.02 | | | |
| A8 | 0.07 | | 3 | 8.02 | | | 2 |
| | | | 2 | 2.95 | | | |
| | | | 1 | 8.02 | | | |
| B2 | 0.15 | | 3 | 2.95 | | 0.00 | 6 |
| | | | 2 | 2.95 | | | |
| | | | 1 | 2.95 | | | |

| | | | | | | | |
|---|---|---|---|---|---|---|---|
| * Position of pellet from positive electrode terminal side | | | | | | | |

As shown in Table 2, even if the thickness of the body portion is thin such as 0.15 mm or less, by adjusting the proportion of the conductive agent (or resistance) in the middle pellet and the end pellets, swelling of the body portion is reduced in A1 and A4 to A8, as compared with B2. From the viewpoint of achieving a higher effect of suppressing swelling, the thickness of the body portion is preferably 0.08 mm or more.

### Examples 9 to 14

Alkaline batteries were produced in the same manner as in Example 7 except that a mixing proportion of the electrolytic manganese dioxide and the conductive agent was adjusted such that a second proportion of the conductive agent in the end pellets positioned at both end portions becomes values shown in Table 3, and evaluations of (a) and (c) were carried out.

The results are shown in Table 3. A9 to A14 represent Examples 9 to 14, respectively. Table 3 also shows the results of A7 and B3.

**[Table 3]**

| | Thickness of body portion (mm) | n | Position of pellet* | Proportion of mass of conductive agent in total mass of MnO₂ and conductive agent (% by mass) | MnO₂ density in positive electrode (g/m³) | Second proportion - first proportion (% by mass) | Swelling of case (cases/ 10 cases) |
|---|---|---|---|---|---|---|---|
| A7 | 0.08 | 3 | 3 | 8.02 | 3.05 | 5.07 | 0 |
| | | | 2 | 2.95 | | | |
| | | | 1 | 8.02 | | | |
| A9 | | | 3 | 6.96 | | 4.00 | 0 |
| | | | 2 | 2.95 | | | |
| | | | 1 | 6.96 | | | |
| A10 | | | 3 | 6.42 | | 3.47 | 0 |
| | | | 2 | 2.95 | | | |
| | | | 1 | 6.42 | | | |
| A11 | | | 3 | 5.89 | | 2.94 | 0 |
| | | | 2 | 2.95 | | | |
| | | | 1 | 5.89 | | | |
| A12 | | | 3 | 5.36 | | 2.41 | 0 |
| | | | 2 | 2.95 | | | |
| | | | 1 | 5.36 | | | |
| A13 | | | 3 | 5.09 | | 2.14 | 0 |
| | | | 2 | 2.95 | | | |
| | | | 1 | 5.09 | | | |
| A14 | | | 3 | 4.82 | | 1.87 | 2 |
| | | | 2 | 2.95 | | | |
| | | | 1 | 4.82 | | | |
| B2 | 0.15 | | 3 | 2.95 | | 0.00 | 6 |
| | | | 2 | 2.95 | | | |
| | | | 1 | 2.95 | | | |

| | | | | | | | |
|---|---|---|---|---|---|---|---|
| * Position of pellet from positive electrode terminal side | | | | | | | |

As shown in Table 3, even if the thickness of the body portion is thin such as 0.08 mm or less, by adjusting the proportion of the conductive agent (or resistance) in the middle pellet and the end pellets, in A7, A9 to A14, swelling of the body portion is reduced as compared with B2. From the viewpoint of achieving higher effect of suppressing swelling, a difference between the first proportion and the second proportion is preferably larger than 1.87% by mass, and preferably, for example, 2.0% by mass or more, or 2.1% by mass or more.

### Examples 15 to 20

Alkaline batteries were produced in the same manner as in Example 13 except that the mixing proportion of the electrolytic manganese dioxide and the conductive agent was adjusted such that the proportion of the conductive agent in each pellet was a value shown in Table 4, and evaluations of (a) and (c) were carried out.

The results are shown in Table 4. A15 to A20 represent Examples 15 to 20, respectively. Table 4 also shows the result of A13.

**[Table 4]**

| | Thickness of body portion (mm) | n | Position of pellet* | Proportion of mass of conductive agent in total mass of MnO₂ and conductive agent (% by mass) | MnO₂ density in positive electrode (g/m³) | Second proportion - first proportion (% by mass) | Swelling of case (cases/ 10 cases) |
|---|---|---|---|---|---|---|---|
| A13 | 0.08 | 3 | 3 | 5.09 | 3.05 | 2.14 | 0 |
| | | | 2 | 2.95 | | | |
| | | | 1 | 5.09 | | | |
| A15 | | | 3 | 5.36 | | | 0 |
| | | | 2 | 3.22 | | | |
| | | | 1 | 5.36 | | | |
| A16 | | | 3 | 5.89 | | | 0 |
| | | | 2 | 3.75 | | | |
| | | | 1 | 5.89 | | | |
| A17 | | | 3 | 6.43 | | | 0 |
| | | | 2 | 4.29 | | | |
| | | | 1 | 6.43 | | | |
| A18 | | | 3 | 6.96 | | | 0 |
| | | | 2 | 4.82 | | | |
| | | | 1 | 6.96 | | | |
| A19 | | | 3 | 7.50 | | | 0 |
| | | | 2 | 5.36 | | | |
| | | | 1 | 7.50 | | | |
| A20 | | | 3 | 8.02 | | | 0 |
| | | | 2 | 5.88 | | | |
| | | | 1 | 8.02 | | | |

| | | | | | | | |
|---|---|---|---|---|---|---|---|
| * Position of pellet from positive electrode terminal side | | | | | | | |

As shown in Table 4, even if the first proportion of the middle pellet is changed, by adjusting the conductive agent (or resistance) in the middle pellet and the end pellet, swelling of the body portion is suppressed.

### Examples 21 to 24

Alkaline batteries were produced in the same manner as in Example 1 except that a mixing proportion of the electrolytic manganese dioxide and the conductive agent was adjusted such that the proportion of the conductive agent in each pellet is a value shown in Table 5, and in production of the pellets, a filling amount of the positive electrode material mixture to the mold was changed, and a pressure at the time of pressure-molding was adjusted. Evaluations of (a) and (c) were carried out.

The results are shown in Table 5. A21 to A24 represent Examples 21 to 24, respectively.

**[Table 5]**

| | Thickness of body portion (mm) | n | Position of pellet* | Proportion of mass of conductive agent in total mass of MnO₂ and conductive agent (% by mass) | MnO₂ density in positive electrode (g/m³) | MnO₂ density in positive electrode (g/m³) | Pellet strength (gf) | Second proportion - first proportion (% by mass) | Swelling of case (cases/ 10 cases) |
|---|---|---|---|---|---|---|---|---|---|
| A21 | 0.15 | 3 | 3 | 8.02 | 2.96 | 2.76 | 360 | 2.14 | 0 |
| | | | 2 | 5.88 | 2.96 | 2.76 | 360 | | |
| | | | 1 | 8.02 | 2.96 | 2.76 | 360 | | |
| A22 | 0.15 | 3 | 3 | 8.02 | 3.11 | 2.91 | 660 | | 0 |
| | | | 2 | 5.88 | 3.11 | 2.91 | 660 | | |
| | | | 1 | 8.02 | 3.11 | 2.91 | 660 | | |
| A23 | 0.15 | 3 | 3 | 8.02 | 3.30 | 3.10 | 1040 | | 0 |
| | | | 2 | 5.88 | 3.30 | 3.10 | 1040 | | |
| | | | 1 | 8.02 | 3.30 | 3.10 | 1040 | | |
| A24 | 0.15 | 3 | 3 | 8.02 | 3.34 | 3.14 | 1120 | | 0 |
| | | | 2 | 5.88 | 3.34 | 3.14 | 1120 | | |
| | | | 1 | 8.02 | 3.34 | 3.14 | 1120 | | |

| | | | | | | | | | |
|---|---|---|---|---|---|---|---|---|---|
| * Position of pellet from positive electrode terminal side | | | | | | | | | |

As shown in Table 5, even if the density of the manganese dioxide in each pellet is changed, by adjusting the proportion of the conductive agent (or resistance) in the middle pellet and the end pellets, the swelling of the body portion was suppressed.

Note here that in Examples above, the relation between the resistance of the middle pellet and the end pellets was adjusted by adjusting the proportion of the conductive agent, but adjusting was not limited thereto. For example, the relation between the resistance of the middle pellet and the end pellets may be adjusted by adjusting at least one element selected from the group consisting of the proportion of the conductive agent, the proportion of a resin binder, an average particle diameter of manganese dioxide raw material powder, and an average particle diameter of the conductive agent. Also, in the case of adjusting the proportion of the resin binder, the average particle diameter of the manganese dioxide raw material powder, and/or the average particle diameter of the conductive agent, effects the same as or similar to those of the above-mentioned Examples can be obtained. Furthermore, the relation between the resistance of the middle pellet and the end pellet may be adjusted by adjusting the combination of the proportion of the resin binder, the average particle diameter of the manganese dioxide raw material powder, and/or the average particle diameter of the conductive agent, and the proportion of the conductive agent.

When the proportion of the resin binder is adjusted, the proportion of the resin binder in the middle pellet may be 2 to 5 times as the proportion of the resin binder in the end pellets. For example, the amount of the resin binder with respect to the total amount 100 parts by mass of electrolytic manganese dioxide and the conductive agent may be 0.8 parts by mass in the middle pellet, and 0.2 parts by mass in the end pellets.

When the average particle diameter of the manganese dioxide raw material powder is adjusted, the average particle diameter of raw material powder to be used in the middle pellet may be 1.5 times or more and 3 times or less with respect to the average particle diameter of the raw material powder to be used for the end pellets. For example, the average particle diameter D50 of electrolytic manganese dioxide to be used for the middle pellet i may be 60 µm, and the average particle diameter D50 of electrolytic manganese dioxide to be used for the end pellets may be 40 µm.

In the case of adjusting the average particle diameter of the conductive agent, the average particle diameter of the conductive agent to be used for the middle pellet may be 1.5 times or more and 3 times or less with respect to the average particle diameter of the conductive agent to be used for the end pellets. For example, the average particle diameter D50 of the conductive agent to be used for the middle pellet may be 20 µm, and the average particle diameter D50 of the conductive agent to be used for the end pellet may be 10 µm.

### INDUSTRIAL APPLICABILITY

An alkaline battery of the present disclosure has high strength of a pellet of a positive electrode, so that swelling of a battery case can be reduced. Therefore, the alkaline battery of the present disclosure is preferably used as power supplies of electronic devices such as a portable device.

### REFERENCE MARKS IN THE DRAWINGS

1 battery case
2, 12, 22 positive electrode
2a, 12a, 22a middle pellet
2b, 12b, 22b end pellet
3 negative electrode
4 separator
5 gasket
6 negative electrode current collector
7 negative electrode terminal plate
8 outer packaging label
9 sealing unit
10 center plane
11 hollow portion

## Claims

1. An alkaline battery comprising:
a tubular battery case (1);
a positive electrode (2, 12, 22) filled in the battery case (1), and including a stack of n pieces of hollow tubular pellets;
a negative electrode (3) disposed in hollow portions (11) of the pellets;
a separator (4) disposed between the positive electrode (2, 12, 22) and the negative electrode (3); and
an alkaline electrolytic solution,
wherein the battery case (1) includes a body portion having a thickness of 0.15 mm or less, and of 0.08 mm or more,
the positive electrode (2, 12, 22) contains manganese dioxide and a conductive agent,
n is an integer of 3 or more, and 8 or less, and
a first proportion is lower than a second proportion, where the first proportion is a proportion of a mass of the conductive agent in a total mass of the manganese dioxide and the conductive agent in at least one pellet (2a, 12a, 22a) positioned in a middle portion in a height direction of the stack, and the second proportion is a proportion of a mass of the conductive agent in a total mass of the manganese dioxide and the conductive agent in at least one pellet (2b, 12b, 22b) positioned in end portions in the height direction of the stack,
wherein a difference between the first proportion and the second proportion is 1% by mass or more.

2. The alkaline battery according to claim 1, wherein the first proportion is lower than the second proportion in each of the pellets (2b, 12b, 22b) positioned in both end portions in the height direction of the stack.

3. The alkaline battery according to claim 1 or 2, wherein the difference between the first proportion and the second proportion is 2.1% by mass or more.

4. The alkaline battery according to any one of claims 1 to 3, wherein the first proportion is 5.9% by mass or less.

5. The alkaline battery according to any one of claims 1 to 4, wherein a density of the manganese dioxide in each of the pellets is 2.76 g/cm³ or more and 3.14 g/cm³ or less.

6. The alkaline battery according to any one of claims 1 to 5, wherein a difference between the density of the manganese dioxide of at least one pellet (2a, 12a, 22a) positioned in the middle portion in the height direction of the stack and the density of the manganese dioxide of at least one pellet (2b, 12b, 22b) positioned in the end portions in the height direction of the stack is 0.2 g/cm³ or less.

7. The alkaline battery according to any one of claims 1 to 6, wherein n is an integer of 3 or more and 6 or less.

## Patentansprüche

1. Alkalibatterie, umfassend:
ein röhrenförmiges Batteriegehäuse (1);
eine positive Elektrode (2, 12, 22), die in das Batteriegehäuse (1) gefüllt ist und einen Stapel von n Stücken von hohlen röhrenförmigen Pellets beinhaltet;
eine negative Elektrode (3), die in hohlen Abschnitten (11) der Pellets angeordnet ist;
einen Separator (4), der zwischen der positiven Elektrode (2, 12, 22) und der negativen Elektrode (3) angeordnet ist; und eine alkalische Elektrolytlösung,
wobei das Batteriegehäuse (1) einen Körperabschnitt mit einer Dicke von 0,15 mm oder niedriger und von 0,08 mm oder höher beinhaltet,
die positive Elektrode (2, 12, 22) Mangandioxid und ein leitfähiges Agens enthält,
n eine ganze Zahl von 3 oder höher und 8 oder niedriger ist und
ein erster Anteil geringer als ein zweiter Anteil ist, wobei der erste Anteil ein Anteil einer Masse des leitfähigen Agens in einer Gesamtmasse des Mangandioxids und des leitfähigen Agens in mindestens einem Pellet (2a, 12a, 22a) ist, das in einem mittleren Abschnitt in einer Höhenrichtung des Stapels positioniert ist, und der zweite Anteil ein Anteil einer Masse des leitfähigen Agens in einer Gesamtmasse des Mangandioxids und des leitfähigen Agens in mindestens einem Pellet (2b, 12b, 22b) ist, das in Endabschnitten in der Höhenrichtung des Stapels positioniert ist,
wobei eine Differenz zwischen dem ersten Anteil und dem zweiten Anteil 1 Massen-% oder höher ist.

2. Alkalibatterie nach Anspruch 1, wobei der erste Anteil geringer als der zweite Anteil in jedem der Pellets (2b, 12b, 22b) ist, die in beiden Endabschnitten in der Höhenrichtung des Stapels positioniert sind.

3. Alkalibatterie nach Anspruch 1 oder 2, wobei die Differenz zwischen dem ersten Anteil und dem zweiten Anteil 2,1 Massen-% oder höher ist.

4. Alkalibatterie nach einem der Ansprüche 1 bis 3, wobei der erste Anteil 5,9 Massen-% oder niedriger ist.

5. Alkalibatterie nach einem der Ansprüche 1 bis 4, wobei eine Dichte des Mangandioxids in jedem der Pellets 2,76 g/cm³ oder höher und 3,14 g/cm³ oder niedriger ist.

6. Alkalibatterie nach einem der Ansprüche 1 bis 5, wobei eine Differenz zwischen der Dichte des Mangandioxids von mindestens einem Pellet (2a, 12a, 22a), das in dem mittleren Abschnitt in der Höhenrichtung des Stapels positioniert ist, und der Dichte des Mangandioxids von mindestens einem Pellet (2b, 12b, 22b), das in den Endabschnitten in der Höhenrichtung des Stapels positioniert ist, 0,2 g/cm³ oder niedriger ist.

7. Alkalibatterie nach einem der Ansprüche 1 bis 6, wobei n eine ganze Zahl von 3 oder höher und 6 oder niedriger ist.

## Revendications

1. Pile alcaline comprenant :
un boîtier de pile tubulaire (1) ;
une électrode positive (2, 12, 22) remplissant le boîtier de pile (1), et comprenant un empilement de n pièces de pastilles tubulaires creuses ;
une électrode négative (3) disposée dans des parties creuses (11) des pastilles ;
un séparateur (4) disposé entre l'électrode positive (2, 12, 22) et l'électrode négative (3) ; et
une solution électrolytique alcaline,
dans laquelle le boîtier de pile (1) comprend une partie de corps ayant une épaisseur de 0,15 mm ou moins et de 0,08 mm ou plus,
l'électrode positive (2, 12, 22) contient du dioxyde de manganèse et un agent conducteur,
n est un entier de 3 ou plus et de 8 ou moins, et
une première proportion est inférieure à une deuxième proportion, où la première proportion est une proportion de la masse de l'agent conducteur dans la masse totale du dioxyde de manganèse et de l'agent conducteur dans au moins une pastille (2a, 12a, 12a) positionnée dans une partie centrale dans le sens de la hauteur de l'empilement, et la deuxième proportion est une proportion de la masse de l'agent conducteur dans la masse totale du dioxyde de manganèse et de l'agent conducteur dans au moins une pastille (2b, 12b, 22b) positionnée dans des parties d'extrémité dans le sens de la hauteur de l'empilement,
dans laquelle la différence entre la première proportion et la deuxième proportion est de 1 % en masse ou plus.

2. Pile alcaline selon la revendication 1, dans laquelle la première proportion est inférieure à la deuxième proportion dans chacune des pastilles (2b, 12b, 22b) positionnées dans les deux parties d'extrémité dans le sens de la hauteur de l'empilement.

3. Pile alcaline selon la revendication 1 ou 2, dans laquelle la différence entre la première proportion et la deuxième proportion est de 2,1 % en masse ou plus.

4. Pile alcaline selon l'une quelconque des revendications 1 à 3, dans laquelle la première proportion est de 5,9 % en masse ou moins.

5. Pile alcaline selon l'une quelconque des revendications 1 à 4, dans lequel la masse volumique du dioxyde de manganèse dans chacune des pastilles est de 2,76 g/cm³ ou plus et de 3,14 g/cm³ ou moins.

6. Pile alcaline selon l'une quelconque des revendications 1 à 5, dans laquelle la différence entre la masse volumique du dioxyde de manganèse d'au moins une pastille (2a, 12a, 22a) positionnée dans la partie centrale dans le sens de la hauteur de l'empilement et la masse volumique du dioxyde de manganèse d'au moins une pastille (2b, 12b, 22b) positionnée dans les parties d'extrémité dans le sens de la hauteur de l'empilement est de 0,2 g/cm³ ou moins.

7. Pile alcaline selon l'une quelconque des revendications 1 à 6, dans laquelle n est un entier de 3 ou plus et de 6 ou moins.
